# EUROPEAN PATENT SPECIFICATION

(11) **EP 1 149 807 B1**
(45) Date of publication and mention of the grant of the patent: **28.01.2004**
(21) Application number: 01110021.1
(22) Date of filing: 26.04.2001
(51) Int. Cl.: C03C 25/62, C03C 25/00

(54) **Method of processing a silica glass fiber**
Verfahren zur Bearbeitung eines Quarzglasfasers
Méthode de traitement d'une fibre en verre de silice

(30) Priority: 28.04.2000 JP 2000130122
(43) Date of publication of application: 31.10.2001
(73) Proprietor: Kitagawa Industries Co., Ltd., Nagoya-shi 460-0012 (JP); Toyota School Foundation, Nagoya-shi, Aichi-ken 468-8511 (JP)
(72) Inventor: Ikushima, Akira, Tenpaku Nagoya-shi 468-0076 (JP); Saito, Kazuya, Shimada, Tenpaku-ku Nagoya-shi 468-0028 (JP); Miura, Takashi, Nishikasugai-gun, Aichi-ken, 481-0033 (JP); Nasuda, Shogo, Inazawa-shin, Aichi-ken, 492-8137 (JP)
(74) Representative: Reimold, Otto, Dr. Dipl.-Phys.

(56) References cited:
- EP-A- 0 972 753
- US-A- 4 157 253
- SAITO K ET AL: "IMPROVEMENT OF THE ULTRAVIOLET-PROOF PROPERTY OF SILICA GLASS FIBERS FOR ARF EXCIMER-LASER APPLICATIONS" OPTICS LETTERS,OPTICAL SOCIETY OF AMERICA, WASHINGTON,US, vol. 24, no. 23, 1 December 1999 (1999-12-01), pages 1678-1680, XP000903968 ISSN: 0146-9592

## Description

### BACKGROUND OF THE INVENTION

### Field of the Invention

The present invention relates to a method of processing a silica glass fiber.

### Description of the Related Art

Silica glass fibers have been utilized for transmitting ultraviolet rays (hereinafter referred to as UV) (especially excimer laser beam), for example, in a photomask for excimer laser lithography, in a light guide for transmitting UV used to irradiate UV-hardening resin, and in the fields of microfabrication, medical treatment and the like.

When a silica glass fiber is used for transmitting UV, for example, to irradiate a UV-hardening resin, transmission of UV with a shorter wavelength and higher power is required, so that the hardening time of the resin can be reduced. The short wavelength and high power of the UV must therefor be fully available.

However, when UV is transmitted through silica glass, structural defects in the silica glass, decrease the transmittance. The decrease of transmittance of silica glass becomes greater, as the wavelength of UV becomes shorter and its light power becomes higher. Therefore, when an excimer laser is used as a light source, the transmittance of silica glass becomes worse expecially with KrF excimer laser (wavelength : 248nm) to F₂ excimer laser (wavelength : 157nm) including ArF excimer laser (wavelength : 193 nm). The transmittance becomes worse when a laser of higher light power (one of various excimer lasers like KrF, ArF and F₂) is used as opposed to when a lamp of lower light power (a halogen lamp, a deuterium discharge lamp and the like is used as a light source.

In order to reduce the decrease of transmittance of silica glass due to UV irradiation, or to improve resistance of silica glass to UV, a technique of increasing the hydroxyl group content of silica glass has been proposed in the publication of Japanese Unexamined Patent Application Hei 4-342427, publication of Japanese Unexamined Patent Application Hei 4-342436, etc. However when the hydroxyl group content is increased, the wavelength of UV absorption edge becomes longer, with a result that UV of short wavelength (especially, vacuum ultraviolet zone) cannot be transmitted.

The solution to this problem was provided by a method disclosed in EP-A-972753 or Optics Letters, vol. 24, no. 23, 1 December 1999 in which multiple structural defects are purposefully caused in silica glass by irradiating silica glass with UV, and in which the structural defects are removed by performing heat treatment simultaneously with or after the UV irradiation. Moreover US-A-4157253 describes that UV irradiation of quartz optical fibers with a wavelength of 300-400 nm leads to a different effect, i.e. dissociation of hydroxyl groups, instead of causing structural defects removable by heating.

In applying the method in EP-A-972753 or Optics, Letters, vol. 24, no. 23, 1 December 1999 to a silica glass fiber, there occurred the following problems.

When UV with high power is repeatedly irradiated through the end surface of a fiber to cause structural defects, deterioration occurs only at the irradiated end, and UV does not reach the other end. Therefore, only a short fiber can be processed and it is impossible to process a long fiber throughout length. Also cutting a ong fiber into a plurality of short fibers (about 1 m, for example) and processing these fibers one by one leads to an increase of costs.

On the contrary, if a relatively long fiber is irradiated with a lower power, it can be processed, but that requires a substantially long processing time and thus is unsuitable for mass production.

### SUMMARY OF THE INVENTION

It is an object of the invention to provide a method of changing the properties of silica glass fiber (an improvement in resistance) to UV caused defects by UV irradiation and heat treatment, which is applicable to a long fiber and suitable for mass production, and in consequence achieves improved productivity and reduced cost.

To attain this object a method is proposed having the features of claim 1 or claim 4.

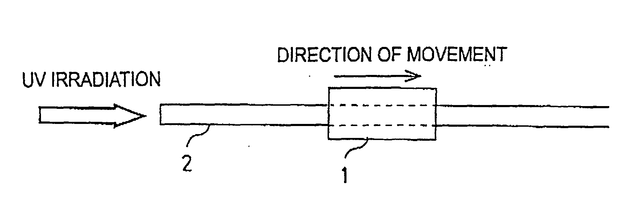

### BRIEF DESCRIPTION OF THE DRAWING

The invention will now be described, by way of example, with reference to the accompanying drawing, in which the single Figure is an illustrative view of a processing device according to an embodiment of the present invention.

### DETAILED DESCRIPTION OF THE PREFERRED EMBODIMENT

According to the method of processing silica glass fiber in the present invention, firstly, UV is irradiated through one end surface of a silica glass fiber, and multiple structural defects are caused in the silica glass at the irradiated end. By heating the end, the structural defects are removed, and the average bond angle of Si-O-Si network in the silica glass is increased compared with that before the heat treatment. As a result, structural relaxation proceeds to give structurally stable glass, and defects due to further UV irradiation are prevented from being formed.

When the structurally stable silica glass is obtained as described above by UV irradiation and heat treatment, its transmittance becomes good. As a result, the UV irradiated through the end surface passes through the portion, which has been treated as described above, travels further forward and causes structural defects in the further forward portion. When this portion is heated by the shift of a heating zone, the average bond angle of Si-O-Si network is increased compared with that before the heat treatment, the same as described above. As a result, structural relaxation proceeds to give structurally stable glass, and defects due to UV irradiation are prevented from being formed. Then, the transmittance becomes good and the UV travels still further forward and causes structural defects in the still further forward portion. By the shift of the heating zone, the still further forward portion is heated to give structurally stable glass, and defects due to UV irradiation are prevented from being formed while the transmittance becomes good.

By continuing this process, the silica glass fiber is treated from the end irradiated with UV toward the other end little by little. Ultimately, production of structural defects by UV and stabilization by heat treatment are carried out throughout the length of the silica glass fiber and improved UV resistance compared with that of the original silica glass fiber is achieved. Once an improvement in UV resistance of the silica glass is thus achieved, the transmittance of the silica glass also can be prevented from being deteriorated by irradiation of radioactive rays, that is, radiation resistance can be improved.

In the process according to the present invention, since the UV resistance and radiation resistance are improved not by increasing hydroxyl group content in silica glass, the wavelength of the UV absorbing end does not become longer.

With respect to UV irradiation and heat treatment to a silica glass fiber, the following conditions and features are to be noted.

The wavelength of the UV to be irradiated is within 50nm-300nm, preferably within 130nm-250nm, and further preferably within 150nm-200nm. When the wavelength is beyond these ranges, the UV resistance and radiation resistance improving effects tend to decrease, and when the wavelength is below the range, the UV resistance and radiation resistance improving effects tend to reach the limit.

The intensity of the UV to be irradiated is within 0.01mJ/cm²-1000mJ/cm², preferably within 1mJ/cm²-500mJ/cm², and further preferably within 1mJ/cm²-30mJ/cm². When the intensity is beyond the range, the deterioration of silica glass tends to increase, and when the intensity is below the range, the UV resistance and radiation resistance improving effects tend to decrease.

As a UV source, which is not limited specifically, an ArF excimer laser, a KrF excimer laser, an excimer lamp, a deuterium lamp, and the like can be employed, for example.

UV irradiation must be continued long enough for structural defects to be caused partially (this can be confirmed by a decrease of the UV transmittance). In other words, it is necessary to continue UV irradiation until the decrease of the UV transmittance reaches its limit.

In the present invention, however, since the heating zone for heat treatment is shifted, the speed of the shift must be taken into account. The shift may be carried out in a continuous way at a predetermined speed or in an intermittent way such that the heating zone is shifted by a predetermined distance and stopped repeatedly.

Therefore, it is preferable to previously determine, based of an experiment, an appropriate irradiation and other conditions such as the speed and the temperature of the heating zone considering the UV intensity, the material and the size of the silica glass fiber, etc., then perform UV irradiation and heat treatment in accordance with these conditions.

Heating for heat treatment is preferably by a noncontact heating method using an electric furnace, infrared irradiation, etc. The shift of the heating zone may be either by moving the heat source (for example, an electric furnace, an infrared lamp, or an infrared laser) by moving the fiber or both. Whereby, the heat source and the fiber are moved. The essential thing is that the heating zone is shifted from one end (the end through which irradiation is performed) of the fiber to the other end.

The temperature of the heat treatment is from 100°C to 1600°C , preferably from 200°C to 1400°C , and further preferably from 300°C to 1300°C. When the temperature is outside these ranges, the UV resistance and radiation resistance improving effects tend to decrease.

The variation of bond angle of Si-O-Si network can be confirmed by analyzing the peak point of infrared absorption around 2260cm⁻¹ in the infrared absorption measurement. Specifically, as the structural relaxation of the silica glass proceeds ( i.e. as the UV resistance increases ), the peak point of infrared absorption around 2260cm⁻¹ in the infrared absorption measurement is shifted to a higher frequency (shorter wavelength) within the range from about 2255cm⁻¹ to about 2275cm⁻¹.

A known silica glass fiber has a three-layer structure which consists of a core, a clad, and a coating in order from its center. The clad is made of fluorine-added silica glass, and the core is made of genuine silica glass, OH-group-added silica glass, or silica glass to which fluorine of a density lower than that in the clad is added. The present invention can be applied to silica glass of other kinds as well as a known silica glass fiber such as the above.

Furthermore, there is not any particular limitation to the material of the coating, although it is preferable to employ a heat resistant coating because the coating is exposed to a relatively high temperature. Among various heat resistant coatings, a metal coating, which has a good heat conductivity, can lead to efficient heat treatment. Also, since any metal coating is a good absorber of near infrared radiation, near infrared radiation should be used for heat treatment when a metal coating is employed.

### An Example of a Processing System

The single figure shows an example of a processing system.

In the processing system, a heating furnace 1 (an electric furnace) corresponding to the heating zone is moved from the shown left to the right in the figure by a not shown moving mechanism. Initially, the heating furnace 1 is located such that the shown left end of the silica glass fiber 2 is placed within the heating furnace 1 . Then, the heating furnace 1 is moved to the right, while UV irradiation is performed to the left end of the silica glass fiber 2 by a not shown UV source. Other heat sources such as a near infrared lamp may be used instead of the heating furnace 1 .

Although only a single silica glass fiber 2 is shown in the present figure, multiple or bundled silica glass fibers, for example, can simultaneously be processed. In this case, by designing a UV source to irradiate the multiple silica glass fibers in a circulating manner, the processing system can be downsized.

As described above, according to the processing method of the present invention, the target part of a silica glass fiber 2 for processing so as to improve its UV resistance is shifted from one end of the fiber to the other end, and thus a change of the properties (an improvement in its UV resistance) by UV irradiation and heat treatment can be applied to a long fiber. Therefore, mass production becomes possible, and an improvement in productivity and lower costs can be achieved.

For working of the present invention, a silica glass fiber having a heat resistant coating is suitable, and among various heat resistant coatings, a metal coating, which has a good heat conductivity, leads to efficient heat treatment. Also, since any metal coating is a good absorber of near infrared radiation, infrared radiation should be used for heat treatment when a metal coating is employed.

## Claims

1. A method of processing a silica glass fiber to improve the UV resistance thereof by purposefully causing multiple structural defects in said silica glass fiber by irradiating said silica glass fiber with UV using a UV intensity of 0,01mJ/cm²-1000mJ/cm² and a UV wavelength of 50nm-300nm and removing said structural defects by heating using a heat treatment temperature of 100°C-1600°C, said method comprising the steps of:
irradiating the UV through one end of said silica glass fiber; and
shifting a heating zone from said one end of said silica glass fiber, through which the UV is irradiated, toward the other end thereof.

2. The method of processing a silica glass fiber according to claim 1, wherein said silica glass fiber is provided with a heat resistant coating therearound.

3. The method of processing a silica glass fiber according to claim 2, wherein said heat resistant coating is a metal coating.

4. A method of processing a silica glass fiber to decrease resistance to transmission of ultraviolet radiation through the fiber comprising the steps of:
a) irradiating an end portion of the fiber through one end thereof to cause multiple structural defects adjacent said end of the fiber using a UV intensity of 0,01mJ/cm²-1000 mJ/cm² and a UV wavelength of 50nm-300nm.
b) heating said end portion of the fiber using a heat treatment temperature of 100°C-1600°C to remove the structural defects to decrease resistance to transmission of ultraviolet radiation through said irradiated portion of the fiber;
c) irradiating a portion of the fiber next adjacent the end portion through the end portion from said end to cause multiple structural defects in said next adjacent portion, using a UV intensity of 0,01mJ/cm²-1000 mJ/cm² and a UV wavelength of 50nm-300nm.
d) heating said next adjacent portion using a heat treatment temperature of 100°C-1600°C to remove structural defects therein and decrease resistance to transmission of ultraviolet radiation therethrough; and
e) continuing the aforementioned steps portion by portion throughout a desired length of the fiber to decrease resistance to transmission of ultraviolet radiation throughout that length.

5. The method of claim 4 comprising continuously irradiating said fiber from said end with ultraviolet radiation.

6. The method of claim 5 comprising step by step heating portions of the fiber in which multiple structural defects are being formed one portion at a time.

7. The method of claim 6 comprising relatively moving along said length of fiber at a rate to remove multiple structural defects produced by said irradiation.

## Patentansprüche

1. Verfahren zum Verarbeiten einer Quarzglasfaser zur Verbesserung ihrer UV-Beständigkeit durch beabsichtigtes Erzeugen mehrfacher Strukturdefekte in der Quarzglasfaser durch Bestrahlen der Quarzglasfaser mit UV-Licht unter Verwendung einer UV-Intensität von 0,1mJ/cm² bis 1000mJ/cm² und einer UV-Wellenlänge von 50nm bis 300nm und Beseitigen der Strukturdefekte durch Erwärmen unter Verwendung einer Wärmebehandlungstemperatur von 100°C bis 1600°C, wobei das Verfahren die folgenden Schritte aufweist:
Einstrahlen des UV-Lichtes durch ein Ende der Quarzglasfaser; und
Verschieben einer Heizzone von dem einem Ende der Quarzglasfaser, durch welches das UV-Licht eingestrahlt wird, zu dem anderen Ende der Faser.

2. Verfahren zum Bearbeiten einer Quarzglasfaser nach Anspruch 1, **dadurch gekennzeichnet, dass** die Quartzglasfaser mit einem wärmebeständigen Überzug um sie herum ausgestattet ist.

3. Verfahren zum Bearbeiten einer Quarzglasfaser nach Anspruch 2, **dadurch gekennzeichnet, dass** der wärmebeständige Überzug ein Metallüberzug ist.

4. Verfahren zum Verarbeiten bzw. Bearbeiten einer Quarzglasfaser zum Verringern des Widerstands gegenüber der Transmission ultravioletter Strahlung durch die Faser mit den folgenden Schritten:
a) Bestrahlen eines Endabschnitts der Faser durch ihr Ende hindurch, um mehrfache Strukturdefekte neben dem Ende der Faser zu erzeugen, wobei eine UV-Intensität von 0,01mJ/cm² bis 1000mJ/cm² und eine UV-Wellenlänge von 50nm bis 300nm verwendet wird;
b) Erhitzen des Endabschnitts der Faser unter Verwendung einer Wärmebehandlungstemperatur von 100°C bis 1600°C zum Beseitigen der Strukturdefekte, um den Widerstand gegenüber der Transmission ultravioletter Strahlung durch den bestrahlten Abschnitt der Faser zu verringern;
c) Bestrahlen eines Abschnitts der Faser neben dem zum Endabschnitt benachbarten Abschnitt durch den Endabschnitt hindurch und von dem Ende ausgehend, um mehrfache Strukturdefekte in dem neben dem benachbarten Abschnitt liegenden Abschnitt zu bewirken, wobei eine UV-Intensität von 0,01mJ/cm² bis 1000mJ/cm² und eine UV-Wellenlänge von 50nm bis 300nm verwendet wird;
d) Erhitzen des nächsten benachbarten Abschnitts unter Verwendung einer Wärmebehandlungstemperatur von 100°C bis 1600°C zum Beseitigen von Strukturdefekten in dem Abschnitt und Verringern des Widerstands gegenüber der Transmission ultravioletter Strahlung durch den Abschnitt hindurch; und
e) Fortsetzen der oben genannten Schritte Abschnitt für Abschnitt über eine gewünschte Länge der Faser hinweg, um den Widerstand gegenüber der Transmission ultravioletter Strahlung durch diese Länge zu verringern.

5. Verfahren nach Anspruch 4, **dadurch gekennzeichnet, dass** die Faser von dem Ende aus kontinuierlich mit ultravioletter Strahlung bestrahlt wird.

6. Verfahren nach Anspruch 5, **dadurch gekennzeichnet, dass** es schrittweise Erhitzungsabschnitte der Faser aufweist, in welchen mehrfache Strukturdefekte Abschnitt für Abschnitt gebildet werden.

7. Verfahren nach Anspruch 6, **dadurch gekennzeichnet, dass** eine Relativbewegung entlang der Faserlänge mit einer Geschwindigkeit erfolgt, um durch die Bestrahlung verursachte mehrfache Strukturdefekte zu beseitigen.

## Revendications

1. Procédé de traitement d'une fibre de verre de silice pour améliorer la résistance aux rayons ultraviolets de celle-ci en provoquant intentionnellement de multiples défauts de structure dans la fibre de verre de silice en irradiant ladite fibre de verre de silice avec des UV en utilisant une intensité UV de 0,01 mJ/cm²-1000 mJ/cm² et une longueur d'onde des UV de 50 nm-300 nm et en éliminant lesdits défauts de structure par chauffage en utilisant une température de traitement thermique de 100°C 1600°C, ledit procédé comprenant les étapes consistant à :
irradier les UV à travers une extrémité de ladite fibre de verre de silice ; et
décaler une zone de chauffage depuis ladite une extrémité de ladite fibre de verre de silice, à travers laquelle les UV sont irradiés, vers l'autre extrémité de celle-ci.

2. Procédé de traitement d'une fibre de verre de silice selon la revendication 1, dans lequel ladite fibre de verre de silice est entourée d'un revêtement résistant à la chaleur.

3. Procédé de traitement d'une fibre de verre de silice selon la revendication 2, dans lequel ledit revêtement résistant à la chaleur est un revêtement métallique.

4. Procédé de traitement d'une fibre de verre de silice pour réduire la résistance à la transmission du rayonnement ultraviolet à travers la fibre comprenant les étapes consistant à :
a) irradier une partie d'extrémité de la fibre à travers une extrémité de celle-ci pour provoquer de multiples défauts de structure adjacents à ladite extrémité de la fibre en utilisant une intensité des rayons ultraviolets de 0,01 mJ/cm²-1000 mJ/cm² et une longueur d'onde des rayons ultraviolets de 50 nm-300 nm.
b) chauffer ladite partie d'extrémité de la fibre en utilisant une température de traitement thermique de 100°C-1600°C pour supprimer les défauts de structure afin de réduire la résistance à la transmission du rayonnement ultraviolet à travers ladite partie irradiée de la fibre ;
c) irradier une partie suivante de la fibre adjacente à la partie d'extrémité à travers la partie d'extrémité depuis ladite extrémité pour provoquer de multiples défauts de structure dans ladite partie adjacente suivante, en utilisant une intensité des rayons ultraviolets de 0,01 mJ/cm² 1000 mJ/cm² et une longueur d'onde des rayons ultraviolets de 30 nm-300 nm.
d) chauffer ladite partie adjacente suivante en utilisant une température de traitement thermique de 100°C-1600°C pour supprimer des défauts de structure à l'intérieur de celle-ci et diminuer la résistance à la transmission du rayonnement ultraviolet à travers celle-ci ; et
e) poursuivre les opérations susmentionnées partie par partie sur toute la longueur souhaitée de la fibre pour réduire la résistance à la transmission du rayonnement ultraviolet sur l'ensemble de cette longueur.

5. Procédé selon la revendication 4 comprenant une irradiation continue de ladite fibre à partir de ladite extrémité avec un rayonnement ultraviolet.

6. Procédé selon la revendication 5, comprenant le chauffage étape par étape de parties de la fibre, dans lequel de multiples défauts de structure sont formés sur une partie à la fois.

7. Procédé selon la revendication 6, comprenant un déplacement relatif le long de ladite longueur de fibre à une vitesse permettant d'éliminer les multiples défauts de structure produits par ladite irradiation.
